Europäisches Patentamt

European Patent Office

Office européen des brevets

(19)

(11) **EP 1 118 197 B1**

(12) **EUROPEAN PATENT SPECIFICATION**

(45) Date of publication and mention
of the grant of the patent:
**24.08.2005 Bulletin 2005/34**

(51) Int Cl.⁷: **H04L 27/26**, H04L 1/12

(21) Application number: **99969869.9**

(86) International application number:
**PCT/EP1999/006795**

(22) Date of filing: **14.09.1999**

(87) International publication number:
**WO 2000/019676 (06.04.2000 Gazette 2000/14)**

(54) **TIME-FREQUENCY DIFFERENTIAL ENCODING FOR MULTICARRIER SYSTEM**

DIFFERENTIELLE KODIERUNG IM ZEIT-UND FREQUENZBEREICH FÜR
MEHRTRÄGERSYSTEM

CODAGE DIFFERENTIEL TEMPS-FREQUENCE POUR UN SYSTEME A MULTIPORTEUSES

(84) Designated Contracting States:
**DE ES FI FR GB SE**

(30) Priority: **30.09.1998 EP 98118471**

(43) Date of publication of application:
**25.07.2001 Bulletin 2001/30**

(73) Proprietor: **TELEFONAKTIEBOLAGET LM
ERICSSON (publ)
164 83 Stockholm (SE)**

(72) Inventors:
• **HUBER, Johannes
D-91094 Langensendelbach (DE)**
• **MÜLLER-WEINFURTNER, Stefan
D-90409 Nürnberg (DE)**

(74) Representative: **HOFFMANN EITLE
Patent- und Rechtsanwälte
Arabellastrasse 4
81925 München (DE)**

(56) References cited:
**EP-A- 0 752 779          DE-A- 4 114 274**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 118 197 B1

## Description

[Field of the Invention]

The present invention relates to a method for transmitting data symbols associated with at least one communication channel between at least two devices of a communications system via a transmission carrier divided into a plurality of parallel subcarriers spaced in frequency direction.

[Background of the Invention]

In today's communication networks, and in particular in wireless communication networks, a large number of subscribers needs to be serviced with limited transmission capacity, i.e., a limited bandwidth is available for providing services to a plurality of subscribers. Further, a transmission quality may be impaired by characteristics of the transmission medium or by external influences.

A number of access schemes is known for placing a large number of communication channels onto a transmission medium. One of this access schemes, is FDMA (Frequency-Division Multiple Access).

In FDMA, signals from a plurality of users are assigned different frequencies of a frequency band of a transmission medium. Since each channel occupies its own frequency band or subcarrier, the communication signals may be transmitted simultaneously and mutually independent. Guard bands are maintained between adjacent signal spectra of subcarriers in order to minimize cross talk between different communication channels.

In OFDM (Orthogonal Frequency Divisional Multiplexing), as for example described in "The Mobile Ccommunications Handbook", Jerry D. Gibson, CRC Press, Inc., 1996, ISBN 0-8493-8573-3, blocks of data symbols are transmitted in parallel by employing a large number of orthogonal subcarriers. OFDM thus parses the frequency-selective transmission channel into parallel and ideally independent transmission channels. The data symbols are usually associated with one single user. A frequency multiplexing may be implemented using the inverse discrete Fourier transform (IDFT) for data vectors in the modulator. A number of subcarriers, so-called virtual carriers, may be set to zero, in order to shape the power density spectrum appropriately.

In OFDM, at first data symbols are mapped onto the subcarriers. A block of data is represented along the frequency axis. Such a block may be called frame. In a continuous data transmission frame after frame is transmitted, thus a two dimensional time-frequency plane of subcarrier symbols carrying the information to be transmitted is created. Then each subcarrier is modulated with a complex coefficient chosen according to a signal constellation. The subcarriers may have different complex coefficients. Thereafter, each subcarrier vector in frequency direction, comprising all carrier amplitudes at a particular instant in time, is transformed into the time domain, e.g., using the inverse discrete Fourier transform, resulting in a discrete time representation of the communication signal. This discrete time representation of the communication signal may then be transmitted via the transmission medium, e.g., a frequency band, using an ordinary pulse-amplitude modulation (PAM) technique. OFDM thus allows to transfrom a distortion of a signal, caused by a linear dispersive system (convolution of the transmitted signal with an impulse response of the transmission channel) into a multiplication of the subcarriers with the corresponding transfer function of the transmission channel.

In OFDM, a certain number of samples from the transform output may be duplicated to form a so-called guard interval, wherein the duplicated samples may be placed in front of (cyclic prefix) or after (cyclic postfix) of the original samples. The guard interval allows to introduce a necessary cyclic characteristic of the signal.

However, a time-dispersive and therefore frequency-selective channel distorts the transmission signal, and the receiver, after retransformation of the transmitted signal into the frequency domain, will obtain a noisy and distorted representation of the original subcarriers, i.e., subcarrier vectors in time direction (the subcarrier vectors have a defined length due to block transmission).

To improve the quality of the received and demodulated signal, differentially encoded modulation schemes together with incoherent demodulation may advantageously be used, even though a loss in power efficiency for the digital transmission is connected with non-coherency. The use of differential encoding in OFDM is studied in "Principle of Modulation and Channel Coding for Digital Broadcasting.for Mobile Subscribers", M. Alard and R. Lassalle, "EBU Review-Technical, No. 224, pp. 168-190, 1987." For differential encoding there is differentially encodable symbol alphabets (e.g., M-ary differential phase shift keying M-DPSK or M-ary differential amplitude and phase shift keying M-DAPSK) may be used.

Accordingly, the transmitted information may be expressed as phase (and amplitude) variation from one subcarrier symbol to another subcarrier symbol, as it may be expressed as a multiplication of a previous subcarrier symbol with the information bearing symbol in order to obtain the next subcarrier symbol. Hence, the phase and the amplitude of the information bearing symbol expresses the phase difference and the amplitude ratio between subsequent data symbols.

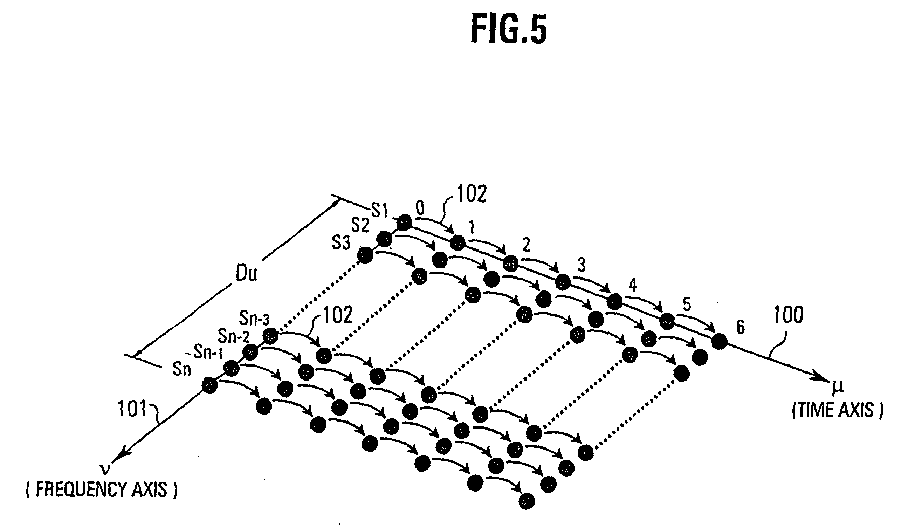

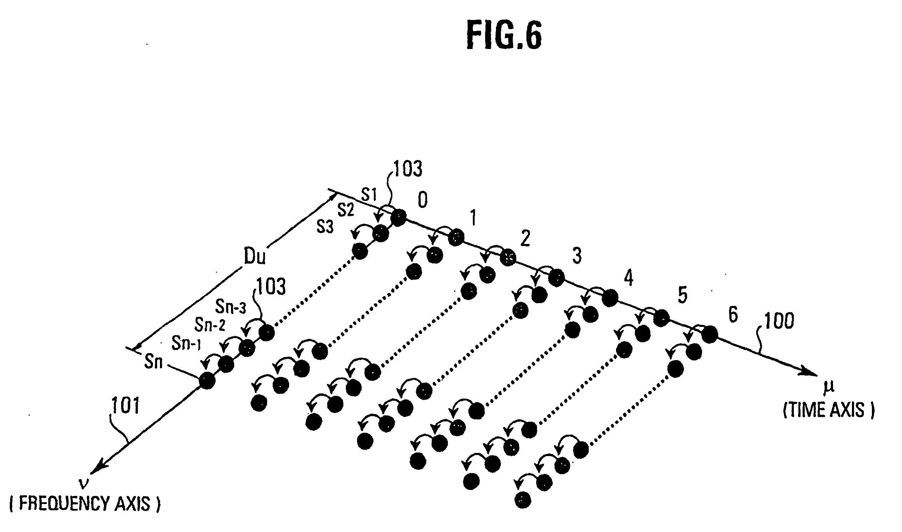

In OFDM, both directions for differential encoding, in time direction and frequency direction are feasible, as illustrated in Figs. 5 and 6.

In Fig. 5, a differential encoding in time direction is illustrated. Fig. 5 shows a two dimensional time-frequency plane with plurality of subcarriers S1, S2, ... Sn is illustrated. The subcarriers are spaced in frequency direction along the frequency axis 101 with the frequency parameter $\nu$. Subsequent subcarrier symbols, illustrated by filled circles, of a particular subcarrier are illustrated along a time axis 100 with the discrete time parameter $\mu$.

As illustrated with arrows 102 in Fig. 5, each subcarrier symbol is obtained by processing a previous subcarrier symbol with a data symbol of the signal to be transmitted, i.e., the data symbols are differentially encoded. Thus, the transmitted information is contained in the transition between subsequent subcarrier symbols. As it becomes obvious with the direction of the arrows 102, the differential encoding is carried out in time direction, i.e. subsequent symbols of a particular subcarrier vector in time direction are obtained from a previous subcarrier symbol of the same subcarrier vector in time direction.

Fig. 6 shows an example for differential encoding in frequency direction. Again, a plurality of S1, S2 - Sn subcarriers are illustrated in the two dimensional time frequency plane, the subcarriers being spaced in frequency direction along the frequency axis 101 with the parameter $\nu$. In the example of Fig. 6, a subcarrier symbol of a particular subcarrier is now obtained by processing a subcarrier symbol from a neighboring subcarrier associated with the same instant in time, as it is indicated by arrows 103 in Fig. 6. Therefore, the information to be transmitted is now contained in the transitions between subcarrier symbols of adjacent subcarriers. As it becomes obvious with the direction of the arrows 103, the differential encoding is carried out in frequency direction.

Both techniques allow to improve transmission characteristics, however, differential encoding in time direction is still susceptible to carrier frequency offsets and differential encoding in frequency direction is still susceptible to frame synchronization errors and channel variations in frequency direction, as they inevitably occur in frequency-selective channels.

Further, both differential encoding schemes require considerable overhead, since for encoding in frequency direction the first symbol of each carrier must be spent as reference information and does not contain any useful information, and for differential encoding in time direction, an entire subcarrier vector in time direction must be spent as reference information and does usually not contain useful data-bearing information.

EP 0 752 779 A2 describes a distribution of a phase of references in a multicarrier system wherein phase references in a data transfer system are based on the multiplexing of orthogonal frequency components. Elementary signals of the same symbol form a phase reference chain, the head of which is the elementary signal which contains the phase reference. The phase of an adjacent frequency is determined in such a way that the phase shift to the said frequency reference corresponds to the bit content of the elementary signal of the subfrequency in question as is usual in the case of quadrature phase-shift keying. A first symbol comprises the first elementary signal which contains the phase reference and is used for forming a differential phase shift chain in frequency direction, thus generating other elementary signals. The elementary signals are then used in generating a differential phase shift chain in time direction.

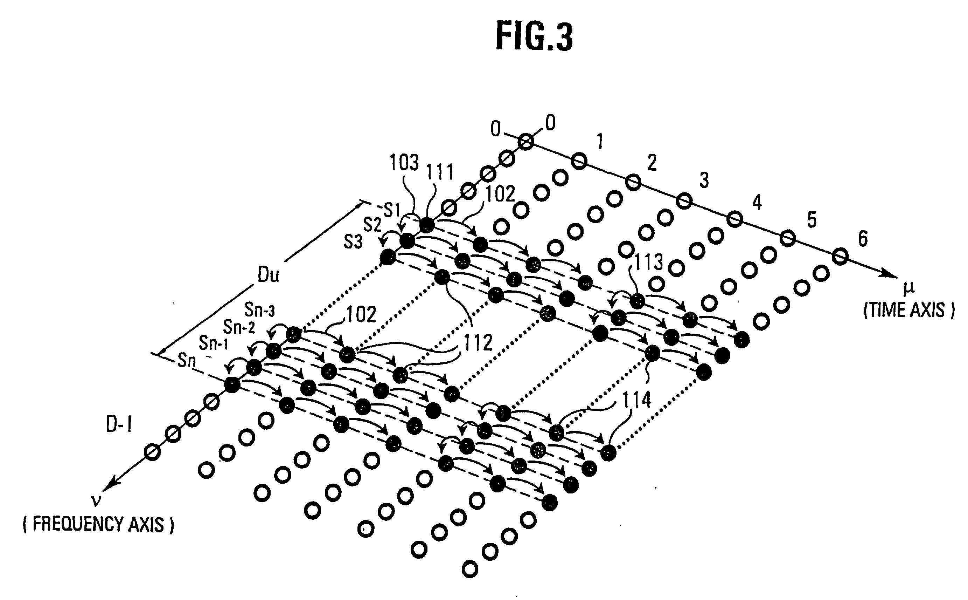

DE 41 14 274 A1 describes a digital modulation process and an arrangement for a multi-channel transmission system in which data flow is distributed over a plurality of sub-carriers lying close together in the frequency range. Neighbouring sub-carriers are interlinked in such a way that the data on two adjacent sub-carriers are transmitted in phase difference. Fig. 3 shows an arrangement wherein a time sequence of data symbols of a subcarrier and data of neighbouring subcarriers are interconnected with each other. A data symbol is transmitted with a phase difference between two subsequent data symbols and is transmitted with multiplied data of subcarriers on a multiplier. In the receiver the multiplied complex signal of the subcarrier is multiplied with the conjugate complex signal of the neighbouring subcarrier and process with a further multiplier. Signals of a subcarrier are therefore first encoded differentially and then precoded frequency differential and then decoded in the receiver in the reverse direction.

[Summary of the Invention]

It is therefore object of the invention to provide a method for transmitting data symbols with improved transmission characteristics and at reduced overhead.

This object of the invention is solved by a method with the features of claims 1 and 2. Further, the object of the invention is solved by a communications device with the features of claim 12.

A method for transmitting data symbols associated with at least one communication channel between at least two devices of a communications system via a transmission carrier divided into a plurality of parallel subcarriers spaced in frequency direction comprises: differentially encoding at least one predefined primary subcarrier symbol of at least one subcarrier with a first subset of the data symbols in frequency direction, for generating primary subcarrier symbols for the remaining subcarriers; differentially encoding the primary subcarrier symbols with a second subset of the data symbols in time direction, for generating secondary subcarrier symbols; transforming each of a plurality of subcarrier vectors into the time domain, the subcarrier vectors being constituted by primary and secondary subcarrier symbols at predetermined instants in time; and transmitting the transformed subcarrier vectors, i.e., time domain samples, via the transmission carrier. That is, the time domain samples may be modulated onto the transmission carrier.

The object of the invention is also solved by a communications device with the features of claim 13 and a broadcasting system with the features of claim 14.

In combining differential encoding in frequency direction and differential encoding in time direction in a multicarrier transmission, the invention allows to reduce transmission susceptibilities to time and frequency variations.

The invention further allows to considerably reduce a required overhead needed for bursty data transmission, since it is only required to provide a single primary or reference subcarrier symbol not containing any useful information. All other primary or reference symbols of all other subcarriers may be derived from this first subcarrier symbol and thus may already contain useful information.

According to an advantageous embodiment of the invention, the primary subcarrier symbols may constitute at least one subcarrier vector and thus provide reference information for encoding the individual subcarriers. Further, the secondary subcarrier symbols may constitute the remaining subcarrier vectors. Thus, at least one frequency encoded subcarrier vector may advantageously be provided for further reduction of a susceptibility to frequency variations. The higher the number of frequency encoded subcarrier vectors, the higher the robustness of the transmission with respect to time variations.

Advantageously, the steps of differential encoding and time direction and frequency direction may include multiplying a particular subcarrier symbol with a information bearing data symbol. The date symbol may be complex-valued.

In a further advantageous embodiment of the invention, data symbol blocks to be transmitted may include preamble information, and the first subset of data symbols may include this preamble information. Accordingly, preamble information may be advantageously used for referencing the individual subcarriers.

In case the number of primary symbols, e.g. the number of preamble symbols is smaller than the number of subcarriers, the step of differentially encoding in time direction may include using a primary subcarrier symbol located in a shortest distance in frequency direction with respect to a target subcarrier. Therefore, a subcarrier vector in time direction, which is not directly associated with a primary symbol, may still be encoded using a neighboring primary subcarrier symbols or primary subcarrier symbols located closest in frequency direction.

Further, if the number of primary symbols is smaller than a number of subcarriers, an interpolation between existent primary subcarrier symbols may be employed before performing the step of differentially encoding in time direction. In this case, the invention advantageously allows to provide an estimation of a primary symbol of a subcarrier vector in time direction, thus allowing an encoding in time direction, if only a limited set of primary symbols is available.

Still further, a data value describing the transmission quality of the transmission channel may be periodically received via a returning channel. And the first subset of data symbols for encoding in frequency direction may be selected in accordance with these channel conditions. The channel conditions may include information on the extent of time variance of the transmission channel.

A transmission using OFDM (Orthogonal Frequency Division Multiplexing) may be advantageously employed.

The data symbols may include digital voice data of a cellular communication system, digital audio broadcasting data or digital video data, or a combination thereof.

Further advantageous embodiments of the invention are described in further dependent claims.

[Brief Description of the Figures]

The invention may be best understood, if read together with the accompanying drawings, in which:

Fig. 1   shows a communication system employing the method according to the invention;

Fig. 2   shows an example of a plurality of parallel subcarriers in a two dimensional time-frequency plane without virtual subcarriers, the subcarrier symbols being differentially encoded in time direction and frequency direction in accordance with the invention;

Fig. 3   shows another example of a plurality of parallel subcarriers, including virtual subcarriers, in a two dimensional time-frequency plane, the subcarrier symbols being differentially encoded in time direction and frequency direction in accordance with the invention;

Fig. 4   shows an example of a plurality of parallel subcarriers including preamble information in a two dimensional time-frequency plane, the subcarrier symbols being differentially encoded in time direction and frequency direction in accordance with the invention;

Fig. 5   shows a known example for differential encoding in time direction; and

Fig. 6 shows a known example for differential encoding in time direction.

[Detailed Description of Embodiments]

In the following, the invention will be described in detail, taking reference to the figures.

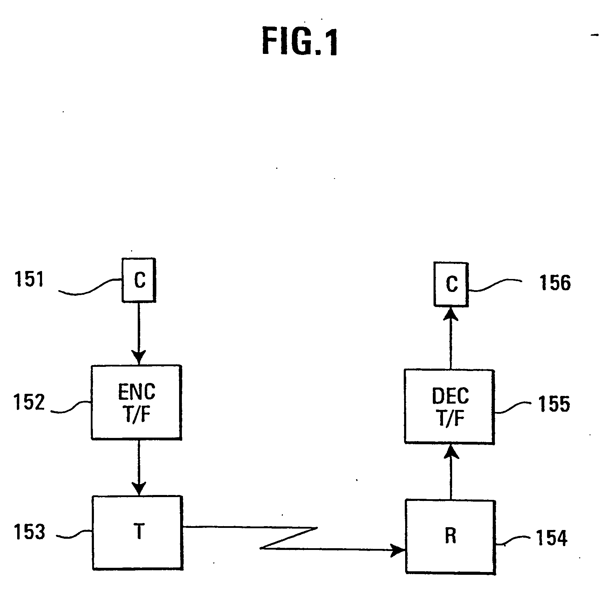

Fig. 1 shows a communication system employing the method according to the invention.

The communication system includes two communication devices 151, 156 for a communication between users, e.g., a voice, data, audio or video transmission. The communication system may be constituted by a broadcasting system.

In the example of Fig. 1, the communication device 151 transmits a data signal, e.g., a sequence of data symbols to an encoder 152. At the encoder, the data symbols from communication device 151 are arranged for a transmission via a transmission carrier divided into a plurality of parallel subcarriers spaced in frequency direction.

In particular, the encoder differentially encodes at least one predefined primary subcarrier symbol of at least one subcarrier (and a particular instant in time) with a first subset of the data symbols received from the communication device 151 in the frequency direction, for generating primary subcarrier symbols for the remaining subcarriers. Further, the encoder 152 differentially encodes the primary subcarrier reference symbols with a second subset of the data symbols from the communication device 151 in the time direction for generating secondary subcarrier symbols. Viewed in frequency direction, the thus generated grid of subcarrier symbols constitutes a plurality of subcarrier vectors.

The primary subcarrier symbol may generally be arbitrarily set, since only a phase (or amplitude) difference to the next symbol is of importance. However, for simplicity, a suitable value, e.g., 1 or 1+j, may be chosen and preset. A knowledge of this value in the receiver is not necessary. Thus, not the value but the position of the primary subcarrier symbol is of importance, for example, the number of the subcarrier $\nu$ and the time instant $\mu$. Thus, predefined primary subcarrier symbol in this context does not primarily refer to a value of the primary subcarrier symbol but to a position of the primary subcarrier symbol.

Thus, the encoder generates in a time-frequency plane a two dimensional grid of subcarrier symbols spaced in frequency direction, constituting subcarrier vectors in frequency direction, and spaced time direction, constituting subcarrier vectors in time direction. A subset of the two dimensional plane of the subcarrier symbols, according to the invention, is differentially encoded in frequency direction, another subset of the subcarrier symbols is differentially encoded in time direction. In general, any combination of differential encoding in time direction and differential encoding in frequency direction with generally arbitrary sequences of subcarrier symbols may be employed. Of course, the sequence of subcarrier symbols is to be known at the receiver.

The encoder then transforms each subcarrier vector in frequency direction (i.e., vectors of subcarrier symbols in frequency direction) into the time domain, each subcarrier vector in frequency direction being constituted by primary and/or secondary subcarrier symbols at a predetermined time instance. The transformation into the time domain may be carried out by a inverse discrete Fourier transform, as it is known in the art.

The subcarrier vectors transformed into the time domain are subsequently forwarded to a transmitter 153 for transmission, e.g., via an air interface. The signal forwarded to the transmitter may include duplicated symbols in front of the actual symbols (cyclic prefix) or after the actual symbols (cyclic postfix), constituting guard intervals. The transmitter 153 may, e.g., use an ordinary pulse-amplitude modulation (PAM) technique for transmitting the sequence of transformed subcarrier vectors via the transmission carrier.

The transmitted signal is received at a receiver 154, where the transformed subcarrier vectors are demodulated. Guard interval portions, if present, may also be from the time-domain signal removed at this point in time. The recovered time-domain vectors are then transmitted to a decoder 155, where the time-domain vectors are retransformed into the frequency domain, e.g., using a discrete Fourier transform. However, the subcarrier vectors are noisy and distorted (e.g., by a multiplicative factor). Subsequently, the decoder recovers the data signal by reversing the differential encoding process in time and frequency direction of the encoder. Of course, the predefined position of the primary subcarrier symbol should be known at the receiver in this step.

The recovered data signal is subsequently transmitted to a receiving device 156.

The system of Fig. 1 may be used for transmission of a single signal between two users, or may be used for transmission of communication signals between a plurality of users. In this case, the individual sequences of data symbols are combined in the encoder, as outlined above, such that a plurality of communication signals may be transmitted simultaneously within a unit, i.e., a frame. The data symbols to be transmitted may be arbitrarily arranged, i.e., distributed onto the time-frequency plane. For example, an individual communication signal may be placed on a subcarrier (i.e., constitute a subcarrier vector in time direction), a plurality of communication signals may be placed on a single subcarrier, or a single communication signal may be placed onto a plurality of subcarriers.

As outlined in the introductory section, the reception quality of a transmission signal transmitted, e.g., using OFDM, may be detoriated by time and frequency shifts. Apart from channel distortion and additive noise at the receiver input, several additional impairments exist during a transmission and/or in the receiver.

A sampling frequency error may occur, so that the transmitter and the receiver have different frequency references for the channel sampling period. Hence, the modulation intervals differ in the transmitter and the receiver. This impairment may be quantified by $\xi_s$ in a normalized manner, i.e., it may be defined as the ratio of the sampling frequency error to the absolute sampling frequency and may typically be in the order of $\xi_s \approx 10^{-5} \ldots 10^{-4}$.

Further, a frame synchronization error may occur due to the non-perfect knowledge of the absolute time in the receiver. Hence, the receiver assumes a signal start which is time shifted by some unknown time offset. The frame synchronization error may be quantified by $\xi_t$ which gives the time offset normalized to the modulation interval.

Further, a carrier frequency error may occur, e.g., in the radio frequency oscillator, and the transmitter and receiver may not match in there absolute frequencies. This effect may be quantified by a normalized carrier frequency offset $\xi_f$ which is defined as the ratio of the absolute frequency offset to the frequency spacing from one subcarrier to the next one.

The effects of each single synchronization parameter deviation usually results in an additional subcarrier interference as the parallel subcarriers may loose their mutual orthogonality. This interference may be interpreted as an additional noise and may be tolerated up to a certain degree. A second effect of frame synchronization errors, sampling frequency errors and carrier frequency offsets may be a (time-variant) phase rotation of the useful subcarrier components in the receiver.

In a coherent transmission scheme all of the above parameters may influence the quality of the received signal.

As an example, in OFDM, Du separate subcarriers having uniform frequency spacing in the available bandwidth be used. Hence, OFDM parses the frequency-selective transmission channel into Du parallel and ideally independent subcarriers. As outlined before, the frequency multiplexing may be implemented by using the inverse discrete Fourier transform (IDFT) for D-ary ($D \geq Du$) vectors in the encoder. A number of D-Du subcarriers - the so-called virtual carriers - is set to zero, to shape the power density spectrum appropriately. The index $\nu$ again denotes the discrete frequency index, which equivalently represents the subcarrier number. $\mu$ denotes the discrete time index.

In OFDM, at first, binary data is mapped onto the Du subcarriers. Thereby, subcarrier symbol $\nu,\mu$ is modulated with a complex coefficient $A_{\mu,\nu}$ chosen according to a signal constellation. However, not all Du active subcarriers need to employ the same complex-valued signal set.

The subcarrier vector $[A_{\mu,0}, \ldots . A_{\mu,D-1}]$ comprising all subcarrier symbols at time instant $\mu$ is transformed into the time domain, using a D-point IDFT. This results in the discrete time representation of the transmit signal in the $\mu$-th block which consists of exactly D sample values.

A total number of Ds - D samples from the transform output is duplicated to form the guard interval, where $Ds \geq D$ is the overall number of samples associated with one subcarrier vector.

The arrangement of the duplicated samples can be done such that all samples are placed in front of (cyclic prefix) or after (cyclic postfix) the original D samples. A mixture of both is possible, too.

Finally, the Ds samples of time interval $\mu$ may be transmitted using an ordinary PAM (pulse amplitude modulation).

Assuming a frequency-selective but time-invariant channel, and assuming rather small parameter values $\xi_s$, $\xi_f$ and $\xi_t$, the received subcarrier amplitude $Y_{\mu,\nu}$ in subcarrier $\nu$ at a time instant $\mu$ may then be written as

$$Y_{\mu,\nu} \approx e^{+j\frac{2\pi}{D}\left[\xi_f\left(\frac{D-1}{2}+D_s\mu\right)+\left(\xi_t+\frac{D-1}{2}\xi_s+D_s\xi_s\mu\right)\nu\right]} \cdot H[\nu] \cdot A_{\mu,\nu} + \text{ noise and interference}$$

(1)

where the subcarrier-dependent factor H [$\nu$] represents the discrete channel transfer function at the frequency of subcarrier $\nu$. H [$\nu$] is a complex-valued variable and in most cases H [$\nu$ + 1] is approximately H [$\nu$], so that there is sufficient coherence between the channel influence in adjacent subcarriers. Further, equation (1) exhibits phase rotations (leftmost factor in Eq. (1)) which consist of static and time-variant components. For the latter, phase terms are encountered, which are linearly increasing with the subcarrier number $\nu$ (frequency), some rise with the time $\mu$ and some are linear in $\mu\nu$.

Equation (1) represents the output signal of the receiver 154 after retransformation into the frequency domain (e.g., using a discrete Fourier Transform), on which the demodulator 155 must base its decision upon. In a so-called coherent transmission scheme, the information is contained in the transmitted absolute subcarrier amplitude $A_{\mu,\nu}$, as outlined above, and a large number of parameters is required to be known or estimated in the receiver to allow a proper coherent demodulation.

Especially phase rotating influences have to be suppressed or tracked and the channel transfer function is required to be estimated to recover the phase, and, if required, the amplitude of $A_{\mu,\nu}$. By the use of differentially encoded modulation with incoherent reception it may be achieved that some of the phase rotations cancel out in the decision variable so that an increasing tolerance to some synchronization errors is obtained.

However, differentially encoding in time direction is mainly aimed at reducing effects induced frequency selectivity, whereas differentially encoding in frequency direction is mainly aimed at reducing time induced effects, as outlined in the introductory portion of the application.

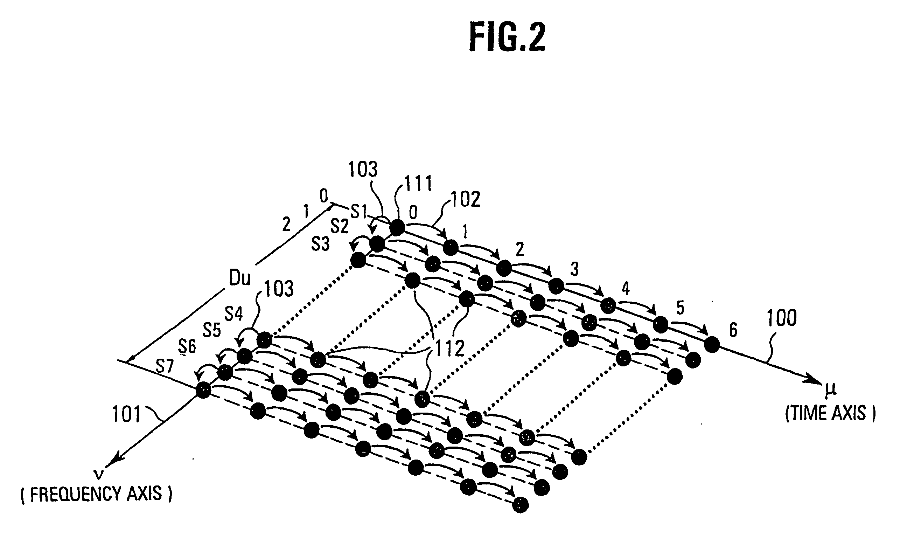

In order to combine the benefits of differential encoding in time direction and frequency direction, with respect to the sensitivity to synchronization deviations in carrier frequency, symbol timing and frame timing, differential encoding in time direction and frequency direction is combined for the same block of data symbols. The combination of differential encoding and time direction and frequency direction within the same data block will be described in detail with respect to Fig. 2.

Fig. 2. shows an example of a plurality of parallel subcarriers S1-Sn, corresponding to amplitudes $A_{\mu,0},.....$ $A_{\mu,D-1}$, in a two dimensional time-frequency plane, the subcarrier symbols being differentially encoded in time direction and frequency direction in accordance with the invention. The individual subcarriers are spaced in frequency direction along the frequency axis 101 with the frequency parameter $\nu$, and extend along the time axis 100 with the time parameter $\mu$.

As illustrated in Fig. 2 with arrows 102 and arrows 103, one predefined primary subcarrier symbol position 111 assigned to the first subcarrier S1, is differentially encoded in frequency direction with a first subset of the data symbols to be transmitted, for generating primary subcarrier symbols for the remaining subcarriers S2, ..., Sn spaced in frequency direction. Accordingly, using a first data symbol, the predetermined primary subcarrier symbol at location $\nu=0$; $\mu=0$ is differentially encoded (in frequency direction) into the primary subcarrier symbol at location $\nu=1$; $\mu=0$, this symbol is differentially encoded, using a second data symbol, into the primary subcarrier symbol at location $\nu=2$, $\mu=0$, etc.

The thus generated primary subcarrier symbols are differentially encoded in time direction with a second subset of the data symbols, thus generating secondary subcarrier symbols. Therefore, the predetermined primary subcarrier symbol at location $\nu=0$, $\mu=0$ is differentially encoded into the subcarrier symbol at location $\nu=0$; $\mu=1$, this symbol is differentially encoded (in time direction), using a second data symbol, into the subcarrier symbol at location $\nu=0$, $\mu=2$, etc., Further, the primary subcarrier symbol at location $\nu=1$, $\mu=0$ is encoded into the subcarrier symbol at location $\nu=1$, $\mu=1$, etc.

Of course, any other sequence of symbols in the above two encoding directions is possible.

The thus generated subcarrier vectors, vectors of subcarrier symbols in frequency direction, may then be transformed into the time domain and transmitted.

In the example of Fig. 2, the steps of differential encoding in frequency direction and time direction start from a single predefined primary subcarrier symbol position 111. Here, a first subset of data symbols is encoded in frequency directions starting from the primary subcarrier symbol 111. This step provides primary subcarrier symbols for all subcarriers. Starting from the now obtained primary subcarrier symbols a second set of data symbols is encoded in time direction, as illustrated by the arrows 102. This step generates secondary subcarrier symbols 112. Of course, the subcarrier symbols do not have to be encoded in the above order.

In the example of Fig. 2, the first subcarrier vector in frequency direction, at time instant $\mu = 0$, is generated by encoding in frequency direction. All other subcarrier vectors are generated by encoding in time direction. However, the invention is not limited to encoding the first subcarrier vector in frequency direction for providing reference symbols, in principal any other subcarrier vector may be encoded in frequency direction.

According to the invention, by using a combination of differentially encoding data symbols in time direction and frequency direction, the advantages of the two differentially encoded modulations differentially encoded modulation schemes are combined. Performing part of the encoding in frequency direction allows to reduce the influence of time variations, and further, the encoding of another subset of the data symbols in time direction allows to reduce the influence of frequency variations, as outlined in the following.

The differential encoding in time direction is performed along the time axis denoted by the parameter $\mu$, e.g. according to

$$A_{\mu+1,\nu} = A_{\mu,\nu} \cdot I_{\mu,\nu} \quad \forall \nu \in [0,D\text{-}1], \forall \mu \qquad (2)$$

According to Eq. (2), the subcarrier transitions from subcarrier amplitude $A_{\mu,\nu}$ to $A_{\mu+1,\nu}$ are differentially encoded in time direction with the complex-valued information amplitude $I_{\mu,\nu}$. The complex information amplitude $I_{\mu,\nu}$ may be a data symbol of a signal to be transmitted, or may be derived from one or more of the data symbols. As seen in Fig. 2 the filled circles represent the grid of absolute amplitudes $A_{\mu,\nu}$ in the time-frequency plane and the arrows 103 denote the multiplication with the respective $I_{\mu,v}$.

The decision variable for a differential demodulation in time direction, as for example performed by the decoder 155 may be written as

$$Y_{\mu,v}^* Y_{\mu+1,v} \approx e^{+j\frac{2\pi}{D}\left[D_t\xi_f + D_t\xi_t v\right]} \cdot \left|H[v]\right| \cdot \left|A_{\mu,v}\right|^2 \cdot I_{\mu,v} \quad + \quad \text{noise and interference}$$

(3)

where * denotes a complex conjugation. Eq. (3) is derived by incorporating equation (1) and using the identity $A^*_{\mu,v}A_{\mu+1,v} = |A_{\mu,v}|^2 I_{\mu,v}$. Here, the factor $I_{\mu,v}$ may represent the useful (phase) information according to the differentially encoded modulation. It is noted, that a differential encoding with respect to the amplitude is also possible.

As can be seen from equation (3), the differentially encoded signal in time direction is robust against time offsets, as $\xi_t$ disappears. However, it is still susceptible to carrier frequency offsets $\xi_f$.

The differential encoding in frequency direction of a subset of data symbols, as shown in Fig. 6, is appropriate for rapidly time-varying channel.

The differential encoding in frequency direction may be performed along the frequency axis denoted $\mu$ according to

$$A_{\mu,v+1} = A_{\mu,v} \cdot I_{\mu,v} \quad \forall \ v \in [0, D\text{-}2], \ \forall \mu \tag{4}$$

Hence, the subcarrier transitions from subcarrier amplitude $A_{\mu,v}$ to $A_{\mu,v+1}$ are differentially encoded in frequency direction with the preferably complex-valued information amplitude $I_{\mu,v}$. Of course, the information amplitude derived from the data symbol may be real valued, too.

The decision variable for differential demodulation in frequency-direction, as i.e. performed by the decoder 155 may be written as

$$Y_{\mu,v}^* Y_{\mu,v+1} \approx e^{+j\frac{2\pi}{D}\left[\xi_t + \frac{D-1}{2}\xi_t + D_t\xi_t\mu\right]} \cdot H^*[v] \cdot H[v+1] \cdot \left|A_{\mu,v}\right|^2 \cdot I_{\mu,v} + \text{noise and}$$

interference (5)

Eq. (5) incorporates Eq. (1) and uses the identity

$$A^*_{\mu,v}A_{\mu,v+1} = |A_{\mu,v}|^2 I_{\mu,v}.$$

There are two multiplicative distortions which introduce a phase bias to the demodulation variable. A time offset has the effect of a constant phase angle $\xi_t$ $2\pi/D$. If the number of subcarriers N is sufficiently large and the sampling offset $\xi_t$ is not significantly larger than a few percent of N, this phase bias due to the time offset will be small and negligible. Secondly, the product of the discrete channel transfer functions $H^*[v]$ $H[v+1]$ will itself produce a phase offset, which depends on the channel variations in frequency direction.

The differentially encoded data symbols in frequency direction can therefore be relatively robust against carrier frequency offset as the phase rotation due to $\xi_f$ is canceled. But differential encoding is susceptible to frame synchronization errors and channel variations in frequency direction like they inevitably occur in frequency-selective channels.

However, since a subset of data symbols, e.g., of a data block of a predefined length, is encoded in frequency direction, and a second subset of data symbols is encoded in time direction, as outlined above, the susceptibility of the jointly modulated data symbols to frequency and time parameters can be reduced by adapting the major direction of encoding according to the channel behaviour.

Further, it is not any longer necessary to spend a full subcarrier vector for reference for the encoding, it is merely necessary to provide a single primary subcarrier symbol as a reference for a first subcarrier.

Hence, the invention allows a substantial reduction of a transmission overhead, especially for a transmission of smaller data blocks, since a minimum of only one primary subcarrier symbol not carrying any information is needed.

All other subcarrier symbols may be derived from this primary subcarrier symbol. In the prior art, for differential encoding in frequency direction, and for differential encoding in time direction, a complete subcarrier vector and subcarrier, respectively, are not information carrying.

Fig. 3 shows an example of Du parallel subcarriers S1-Sn in the two dimensional time-frequency plane $(\mu,\nu)$, the subcarrier symbols being differentially encoded in time direction and frequency direction in accordance with the invention. Again, the subcarriers are spaced in frequency direction. As illustrated by empty circles in Fig. 3, a number of D - Du subcarrier vectors are set to zero, in order to shape the power spectrum appropriately.

In Fig. 3, now two primary subcarrier symbols 111, 113 are defined as initial "seeds" for the differential encoding in time and frequency direction. The encoding in time and frequency direction is performed as before, e.g., as it was outlined with respect to Fig. 2. Starting from a predefined primary subcarrier symbol 111, associated with subcarrier S1, a subset of data symbols is encoded in frequency direction for generating primary subcarrier symbols of the remaining subcarriers. Similarly, starting from a predefined primary subcarrier symbol 113 of the first subcarrier S1, data symbols are encoded in frequency direction in order to provide further primary symbols for the remaining subcarriers.

Following, starting from the two sets of primary subcarrier symbols, a further subset of data symbols is encoded in time direction, as before.

Of course, apart from providing a single primary subcarrier vector in the embodiment of Fig. 1, and providing two primary subcarrier vectors according to the embodiment of Fig. 2, a larger number or other combinations of primary subcarrier symbols may be provided. For example, only part of a subcarrier vector may be encoded in frequency direction for providing primary subcarrier symbols.

The generation of primary subcarrier symbols by encoding data symbols in frequency direction may also be dynamically adjusted in order to adapt the encoding scheme to transmission conditions on the transmission carrier. Via a return channel information about the transmission conditions of the transmission carrier may be transmitted back to the encoder 152, such that at the encoder an appropriate combination of encoding in frequency direction and time direction may be employed. For example, the data value transmitted via the return channel may describe the extent of time variance of the transmission carrier. Accordingly, in case of a large time variance, the encoder may for example increase the number of frequency encoded data symbols in order to reduce the negative influence of a time variant transmission carrier.

In the previous examples it was assumed that the data symbols to be transmitted are not equipped with the preamble sequence for synchronization or for any other purposes.

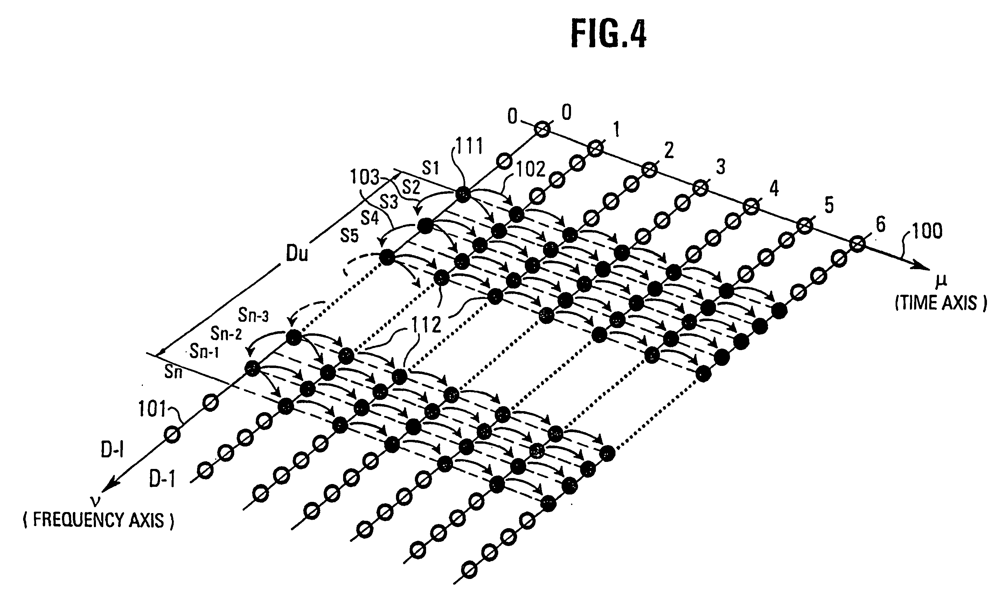

Fig. 4 now shows an example for combining differential encoding in time direction and frequency direction in case the data symbols contain preamble information. The preamble, as, e.g., in OFDM, may be used for synchronization purposes (e.g., frame and frequency synchronization) and may also partially carry information.

According to the invention it is possible to use the preamble information as the first subset of data symbols for differential encoding in frequency direction. However, in efficiently dimensioned preambles the number of symbols of the preamble may not be equal to the number of subcarriers and in most cases the number of symbols of the preamble will be smaller than the number of subcarriers. Accordingly, when encoding preamble data symbols in frequency direction, in order to generate primary subcarrier symbols for all subcarriers, the number of generated subcarrier symbols will be smaller than the number of subcarriers of the subsequent OFDM symbols. Thus, the step of differentially encoding the second subset of data symbols in time direction may include using a primary subcarrier symbol located in a shortest distance in frequency direction with respect to a target subcarrier in order to solve the problem of a missing explicit primary subcarrier symbol, i.e., missing perfect reference.

Further, in case the number of primary symbols is smaller than a number of subcarriers, the step of differentially encoding the second subset of data symbols in frequency and time direction may include interpolating primary subcarrier symbols in order to overcome problems associated with missing primary subcarrier symbols. This step may be executed in the transmitter and/or receiver.

Fig. 3 illustrates an example, where the number of primary subcarrier symbols generated by encoding, e.g., preamble information, in frequency direction is only half the number of subcarriers. In this case, each primary subcarrier symbol is used as a reference for two subcarriers, by choosing the primary subcarrier symbol located closest in frequency direction to a target subcarrier. For example, the primary subcarrier symbol of the third subcarrier S3 is used as a reference not only for the third subcarrier S3 but also for the fourth subcarrier S4.

As it is obvious with the above description, the invention allows a minimization of overhead for reference symbol signaling, since only a small, in the best case only one primary subcarrier symbol is needed for the encoding process. Further, the invention provides an efficient and advantageous use of both differential encoding schemes in time and frequency direction for reducing the influence of time and frequency variations.

The invention may be applied to any multicarrier system, such as discrete multitone, e.g., in a so called X-DSL technique and OFDM (Orthogonal Frequency Division Multiplexing).

Data transmitted using the inventive method may incorporate a plurality of communication channel signals, may include digital voice data of a cellular communication system, digital audio broadcasting data, digital video data or a combination thereof. The invention may be employed in communication systems, in particular cellular communication systems and broadcasting systems.

**Claims**

1. Method for transmitting data symbols associated with at least one communication channel between at least two devices of a communications system over a transmission carrier divided into a plurality of parallel subcarriers (S1 - Sn) spaced in frequency direction, comprising:

   differentially encoding at least one predefined primary subcarrier symbol of at least one subcarrier (S1 - Sn) with a first subset of the data symbols in frequency direction (101), for generating primary subcarrier symbols for the remaining subcarriers;

   differentially encoding the primary subcarrier symbols with a second subset of the data symbols in time direction (100), for generating secondary subcarrier symbols;

   transforming each of a plurality of subcarrier vectors into the time domain, the subcarrier vectors being constituted by primary and secondary subcarrier symbols (112) at predetermined instants in time; and

   transmitting the transformed subcarrier vectors via the transmission carrier;

   **characterized in that**
   the number of primary subcarrier symbols is smaller than the number of subcarriers and the step of differentially encoding the second subset of data symbols in time direction includes using a primary subcarrier symbol located in a shortest distance in frequency direction with respect to a target subcarrier.

2. Method for transmitting data symbols associated with at least one communication channel between at least two devices of a communications system over a transmission carrier divided into a plurality of parallel subcarriers (S1 - Sn) spaced in frequency direction, comprising:

   differentially encoding at least one predefined primary subcarrier symbol of at least one subcarrier (S1 - Sn) with a first subset of the data symbols in frequency direction (101), for generating primary subcarrier symbols for the remaining subcarriers;

   differentially encoding the primary subcarrier symbols with a second subset of the data symbols in time direction (100), for generating secondary subcarrier symbols;

   transforming each of a plurality of subcarrier vectors into the time domain, the subcarrier vectors being constituted by primary and secondary subcarrier symbols (112) at predetermined instants in time; and

   transmitting the transformed subcarrier vectors via the transmission carrier;

   **characterized in that**
   the number of primary subcarrier symbols is smaller than the number of subcarriers and the step of differentially encoding the second subset of data symbols in time direction includes interpolating primary subcarrier symbols.

3. Method according to one of the preceding claims, including
   periodically receiving data via a return channel describing the transmission quality of the transmission channel; and
   varying the number of the first subset of data symbols for encoding in at least one of frequency direction and time direction in accordance with the transmission quality.

4. Method according to one of the preceding claims, **characterized in that** the data symbols are transmitted in blocks of a predefined length.

5. Method according to one of the preceding claims,

**characterized in that**
the primary subcarrier symbols constitute at least one subcarrier vector; and
the secondary subcarrier symbols constitute the remaining subcarrier vectors.

**6.** Method according to one of the preceding claims, **characterized in that** the steps of differential encoding in time and frequency direction include multiplying a subcarrier symbol (112) with a data symbol.

**7.** Method according to one of the preceding claims, **characterized in that** the data symbols are complex valued.

**8.** Method according to one of the preceding claims, **characterized in that** the data symbols include preamble information and the first subset of data symbols includes this preamble information.

**9.** Method according to claim 3, **characterized in that** the data received via the return channel, describing the transmission quality of the transmission channel, include information on the extent of time variance of the transmission channel.

**10.** Method according to one of the preceding claims, **characterized in that** the transmission includes OFDM (Orthogonal Frequency Division Multiplexing).

**11.** Method according to one of the preceding claims, **characterized in that** the data sequences include at least one of the group consisting of:

digital voice data of a cellular communications system;

digital audio broadcasting data; and

digital video data;

**12.** Communications device comprising means adapted to execute all the steps of the method according to one of the claims 1 to 11.

**13.** Broadcasting system comprising the communications device of claim 12.

**Patentansprüche**

**1.** Verfahren zur Übertragung von Datensymbolen, die zumindest mit einem Kommunikationskanal zwischen zumindest zwei Einrichtungen eines Kommunikationssystems assoziiert sind, über einen Träger, aufgeteilt in eine Vielzahl von parallelen Unterträgern (S1 - Sn), die in Frequenzrichtung räumlich angeordnet sind, enthaltend:

Differenzialcodieren von zumindest einem vordefinierten primären Unterträgersymbol von zumindest einem Unterträger (S1 - Sn) mit einer ersten Untermenge der Datensymbole in Frequenzrichtung (101), zur Generierung primärer Unterträgersymbole für die übrigen Unterträger;

Differenzialcodieren der primären Unterträgersymbole mit einer zweiten Untermenge der Datensymbole in Zeitrichtung (100), zur Generierung sekundärer Unterträgersymbole;

Umwandeln von jedem einer Vielzahl von Unterträgervektoren in die Zeitdomäne, wobei die Unterträgervektoren durch primäre und sekundäre Unterträgersymbole (112) bei vorbestimmten Zeitinstanzen gebildet werden; und

Übertragen der umgewandelten Unterträgervektoren über den Träger;

**dadurch gekennzeichnet, dass**
die Anzahl der primären Unterträgersymbole kleiner ist, als die Anzahl der Unterträger und der Schritt der Differenzialcodierung der zweiten Untermenge der Datensymbole in Zeitrichtung die Verwendung eines primären Unterträgersymbols enthält, das in einer kürzesten Entfernung in Frequenzrichtung mit Bezug auf einen Zielunterträger liegt.

2. Verfahren zur Übertragung von Datensymbolen, die zumindest mit einem Kommunikationskanal zwischen zumindest zwei Einrichtungen eines Kommunikationssystems assoziiert sind, über einen Träger, aufgeteilt in eine Vielzahl von parallelen Unterträgern (S1 - Sn), die in Frequenzrichtung räumlich angeordnet sind, enthaltend:

   Differenzialcodieren von zumindest einem vordefinierten Unterträgersymbol von zumindest einem Unterträger (S1 - Sn) mit einer ersten Untermenge der Datensymbole in Frequenzrichtung (101), zur Generierung primärer Unterträgersymbole für die übrigen Unterträger;

   Differenzialcodieren der primären Unterträgersymbole mit einer zweiten Untermenge der Datensymbole in Zeitrichtung (100), zur Generierung sekundärer Unterträgersymbole;

   Umwandeln von jedem einer Vielzahl von Unterträgervektoren in die Zeitdomäne, wobei die Unterträgervektoren durch primäre und sekundäre Unterträgersymbole (112) bei vorbestimmten Zeitinstanzen gebildet werden; und

   Übertragen der umgewandelten Unterträgervektoren über den Träger;

   **dadurch gekennzeichnet, dass**
   die Anzahl der primären Unterträgersymbole kleiner ist, als die Anzahl der Unterträger und der Schritt der Differenzialcodierung der zweiten Untermenge der Datensymbole in Zeitrichtung die Interpolation der primären Unterträgersymbole enthält.

3. Verfahren gemäß einem der vorhergehenden Ansprüche, enthaltend
   das periodische Empfangen von Daten über einen Rückkanal, die Übertragungsqualität des Übertragungskanals beschreibend; und
   das Variieren der Anzahl der ersten Untermenge der Datensymbole zur Codierung in zumindest eine beiden, der Frequenz- und Zeitrichtung, im Einklang mit der Übertragungsqualität.

4. Verfahren gemäß einem der vorhergehenden Ansprüche, darin **gekennzeichnet**, dass die Datensymbole in Blökken einer vorbestimmten Länge übertragen werden.

5. Verfahren gemäß einem der vorhergehenden Ansprüche, darin **gekennzeichnet**, dass
   die primären Unterträgersymbole zumindest einen Unterträgervektor enthalten; und
   die sekundären Unterträgersymbole die übrigen Unterträgervektoren enthalten.

6. Verfahren gemäß einem der vorhergehenden Ansprüche, darin **gekennzeichnet**, dass die Schritte des Differenzialcodierens in Zeit- und Frequenzrichtung das Multiplizieren eines Unterträgersymbols (112) mit einem Datensymbol enthalten.

7. Verfahren gemäß einem der vorhergehenden Ansprüche, darin **gekennzeichnet**, dass die Datensymbole komplex bewertet sind.

8. Verfahren gemäß einem der vorhergehenden Ansprüche, darin **gekennzeichnet**, dass die Datensymbole Präambelinformation enthalten und die erste Untermenge der Datensymbole die Präambelinformation enthält.

9. Verfahren gemäß Anspruch 3, darin **gekennzeichnet**, dass die über den Rückkanal empfangenen Daten, die Übertragungsqualität des Übertragungskanals beschreibend, Information über die Ausdehnung der Zeitvarianz des Übertragungskanals enthalten.

10. Verfahren gemäß einem der vorhergehenden Ansprüche, darin **gekennzeichnet**, dass die Übertragung OFDM (Orthogonal Frequency Division Multiplexing) enthält.

11. Verfahren gemäß einem der vorhergehenden Ansprüche, darin **gekennzeichnet**, dass die Datensequenzen zumindest eine aus der Gruppe enthalten, bestehend aus:

   digitalen Sprachdaten eines zellularen Kommunikationssystems;

   digitalen Audiorundrufdaten; und

digitalen Videodaten.

12. Nachrichtenverkehrseinrichtung, Mittel enthaltend, die zur Ausführung aller Schritte des Verfahrens gemäß einem der Ansprüche 1 bis 11 angepasst sind.

13. Rundrufsystem, die Nachrichtenverkehrseinrichtung des Anspruches 12 enthaltend.

**Revendications**

1. Procédé de transmission de symboles de données associés à au moins une voie de communication entre au moins deux dispositifs d'un système de communication sur une porteuse de transmission divisée en une pluralité de sous-porteuses parallèles (S1 à Sn) espacées dans la direction des fréquences, comprenant :

le codage différentiel d'au moins un symbole prédéfini de sous-porteuse primaire d'au moins une sous-porteuse (S1 à Sn) à l'aide d'un premier sous-ensemble de symboles de données dans la direction (101) des fréquences, pour engendrer des symboles de sous-porteuse primaire pour les sous-porteuses restantes ;
le codage différentiel des symboles de sous-porteuse primaire à l'aide d'un second sous-ensemble des symboles de données dans la direction (100) des temps, pour engendrer des symboles de sous-porteuse secondaire ;
la transformation dans le domaine temporel de chacun d'une pluralité de vecteurs de sous-porteuse, les vecteurs de sous-porteuse étant constitués par des symboles (112) de sous-porteuse primaire et secondaire à des instants prédéterminés dans le temps ; et
la transmission des vecteurs transformés de sous-porteuse via la porteuse de transmission ;

  **caractérisé :**

**en ce que** le nombre de symboles de sous-porteuse primaire est plus petit que le nombre de sous-porteuses et en ce que l'étape de codage différentiel du second sous-ensemble de symboles de données dans la direction des temps comprend l'utilisation d'un symbole de sous-porteuse primaire situé dans une distance la plus courte dans la direction des fréquences par rapport à une sous-porteuse cible.

2. Procédé de transmission de symboles de données associés à au moins une voie de communication entre au moins deux dispositifs d'un système de communication sur une porteuse de transmission divisée en une pluralité de sous-porteuses parallèles (S1 à Sn) espacées dans la direction des fréquences, comprenant :

le codage différentiel d'au moins un symbole prédéfini de sous-porteuse primaire d'au moins une sous-porteuse (S1 à Sn) à l'aide d'un premier sous-ensemble de symboles de données dans la direction (101) des fréquences, pour engendrer des symboles de sous-porteuse primaire pour les sous-porteuses restantes ;
le codage différentiel des symboles de sous-porteuse primaire à l'aide d'un second sous-ensemble des symboles de données dans la direction (100) des temps, pour engendrer des symboles de sous-porteuse secondaire ;
la transformation dans le domaine temporel de chacun d'une pluralité de vecteurs de sous-porteuse, les vecteurs de sous-porteuse étant constitués par des symboles (112) de sous-porteuse primaire et secondaire à des instants prédéterminés dans le temps ; et
la transmission des vecteurs transformés de sous-porteuse via la porteuse de transmission ;

  **caractérisé :**

**en ce que** le nombre de symboles de sous-porteuse primaire est plus petit que le nombre de sous-porteuses et en ce que l'étape de codage différentiel du second sous-ensemble de symboles de données dans la direction des temps comprend l'interpolation des symboles de sous-porteuse primaire.

3. Procédé selon l'une des revendications précédentes, incluant :

la réception périodique de données via une voie de retour décrivant la qualité de transmission de la voie de transmission ; et
la modification, en fonction de la qualité de transmission, du nombre du premier sous-ensemble de symboles de données pour codage dans au moins l'une de la direction des fréquences et de la direction des temps.

4. Procédé selon l'une des revendications précédentes, **caractérisé en ce que** les symboles de données sont transmis en des blocs d'une longueur prédéfinie.

5. Procédé selon l'une des revendications précédentes, **caractérisé :**

   **en ce que** les symboles de sous-porteuse primaire constituent au moins un vecteur de sous-porteuse ; et
   **en ce que** les symboles de sous-porteuse secondaire constituent les vecteurs de sous-porteuse restants.

6. Procédé selon l'une des revendications précédentes, **caractérisé en ce que** les étapes de codage différentiel dans la direction des temps et des fréquences comprennent la multiplication d'un symbole (112) de sous-porteuse par un symbole de données.

7. Procédé selon l'une des revendications précédentes, **caractérisé en ce que** les symboles de données sont des valeurs complexes.

8. Procédé selon l'une des revendications précédentes, **caractérisé en ce que** les symboles de données comprennent une information de préambule et **en ce que** le premier sous-ensemble de symboles de données comprend cette information de préambule.

9. Procédé selon la revendication 3, **caractérisé en ce que** les données reçues via la voie de retour, décrivant la qualité de transmission de la voie de transmission, comprennent de l'information sur l'étendue de la variance dans le temps de la voie de transmission.

10. Procédé selon l'une des revendications précédentes, **caractérisé en ce que** la transmission comprend un OFDM (multiplexage orthogonal par répartition en fréquence).

11. Procédé selon l'une des revendications précédentes, **caractérisé en ce que** les séquences de données comprennent au moins un élément du groupe constitué :

    de données vocales numériques d'un système cellulaire de communication ;
    de données audio numériques de radiodiffusion ; et
    de données vidéo numériques.

12. Dispositif de communication comprenant un moyen adapté pour exécuter toutes les étapes du procédé selon l'une des revendications 1 à 11.

13. Système de radiodiffusion comprenant le dispositif de communication selon la revendication 12.

# FIG.1

# FIG.2

EP 1 118 197 B1

# FIG.3

EP 1 118 197 B1

# FIG.4

EP 1 118 197 B1

EP 1 118 197 B1

# FIG.5

# FIG.6

EP 1 118 197 B1